Europäisches Patentamt

European Patent Office

Office européen des brevets

(19)

(11) Numéro de publication : **0 277 062 B1**

## (12) FASCICULE DE BREVET EUROPEEN

(45) Date de publication du fascicule du brevet :
**13.05.92 Bulletin 92/20**

(51) Int. Cl.[5] : **A23L 1/30, C12H 1/00**

(21) Numéro de dépôt : **88400094.4**

(22) Date de dépôt : **18.01.88**

---

(54) **Procédé d'aromatisation par traitement levurien de produits alimentaires et produits alimentaires obtenus.**

---

(30) Priorité : **19.01.87 FR 8700501**

(43) Date de publication de la demande :
**03.08.88 Bulletin 88/31**

(45) Mention de la délivrance du brevet :
**13.05.92 Bulletin 92/20**

(84) Etats contractants désignés :
**AT BE CH DE ES FR GB GR IT LI LU NL SE**

(56) Documents cités :
**FR-A- 469 373
FR-A- 511 967
CELLULAR & MOLECULAR BIOLOGY, vol. 26, 1980, pages 147-154, Pergamon Press Ltd, Londres, GB; E. PARKKINNEN:
"Multipleforms of carboxylesterases in baker's yeast"**

(56) Documents cités :
**CHEMICAL ABSTRACTS, vol. 103, no. 13, 30 septembre 1985, page 499, résumé no. 103408p, Columbus, Ohio, US; M.A.ALVAREZ-BATISTA et al.: "Aromatic components in the alcoholic fermentation of sherry", & MICROBIOL. ESP. 1984, 37(1-2), 39-45
CHEMICAL ABSTRACTS, vol. 79, no. 23, 10 décembre 1973, page 253, résumé no. 135485p, Columbus, Ohio, US; M. JAKOB et al.:"Influence of pectolytic enzyme preparations on the aroma of apple juice", & LEBENS-M.-WISS. TECHNOL. 1973, 6(4), 138-41
JOURNAL OF DAIRY SCIENCE, vol. 59, no. 5, mai 1976, pages 859-862, Champaign, US; H.J. PEPPLER et al.: "Flavor development inFontina and Romano cheese by fungal esterase"**

(73) Titulaire : **PERNOD-RICARD
142, Boulevard Haussmann
F-75008 Paris (FR)**

(72) Inventeur : **Vladescu, Barbu Dinu Vladimir
12, rue du Général Delestraint
F-75016 Paris (FR)**

(74) Mandataire : **Warcoin, Jacques
Cabinet Régimbeau 26, avenue Kléber
F-75116 Paris (FR)**

EP 0 277 062 B1

## Description

La présente invention concerne un procédé d'aromatisation par traitement levurien de produits alimentaires notamment à base de matières premières végétales ainsi que l'application de ce procédé à l'amélioration de l'arôme de préparations à base de fruits, et de légumes.

Par aromatisation, on entend la régénération et/ou le renforcement d'un profil aromatique. Cette expression couvre l'apparition de nouveaux arômes, ainsi que la disparition de certains composés à l'odeur désagréable, tel que le furfural. Cette définition s'applique à l'ensemble du texte de la description qui va suivre, ainsi qu'aux revendications.

Le développement des techniques de l'industrie agro-alimentaire a entraîné, depuis de nombreuses années, une consommation très importante de préparations à base de fruits, tels que les jus de fruits, les concentrés, les compotes, etc...

Ces produits sont préparés de telle façon que l'on puisse les conserver, dans leur emballage, pendant quelques semaines, voire quelques mois.

Afin d'obtenir un produit "de longue conservation" il est nécessaire de le soumettre à un traitement thermique tel qu'une stérilisation ou une pasteurisation. Toutefois, cette étape, pratiquement obligatoire, occasionne, dans de nombreux cas, la perte d'une partie de l'arôme initial des matières premières.

D'autre part, certaines préparations sont naturellement peu aromatisées et offrent, par conséquent, peu d'intérêt pour le consommateur. En effet, celui-ci est friand d'aliments dans lesquels il retrouve l'arôme des fruits frais.

Enfin, la pasteurisation des purées de fruits conduit fréquemment à l'apparition de furfural dont l'arôme est désagréable.

La présente invention a pour but de remédier aux inconvénients précités en proposant un procédé d'aromatisation par traitement levurien de produits alimentaires notamment à base de matières végétales ainsi que l'application de ce procédé à l'amélioration de l'arôme de préparation à base de fruits, et de légumes.

FR-A-511 967 décrit un procédé utilisant de la levure alcoolique pour augmenter la finesse des arômes de certains fruits et légumes, mais ne révèle ni le choix spécifique des levures, ni leurs activités estérasiques.

Cellular and Molecular Biology, 26 (1980), pages 147-154 décrivent l'analyse de l'activité des estérases dans la levure de boulanger.

Plus particulièrement, l'invention concerne un procédé d'aromatisation par traitement levurien de produits alimentaires notamment à base de matières premières vététales peu aromatisées ou désaromatisées, ou de compositions à base de telles matières, caractérisé en ce que lesdites matières premières végétales sont traitées par une culture de levure ou un extrait acellulaire desdites levures, ces levures présentant une faible activité estérasique.

Le traitement est de préférence effectué sans fermentation alcoolique.

Selon une caractéristique du procédé de la présente invention, les produits comme notamment les matières premières végétales, ou les compositions sont mises en oeuvre après traitement thermique.

On entend par matières premières végétales, par exemple des jus de fruits et des purées de fruits frais, des concentrés de fruits etc... Et l'on entend par compositions, des produits élaborés, tels que des sirops, des liqueurs etc... Enfin, "extrait acellulaire" se rapporte à une préparation de levure que l'on a broyée et de laquelle on a ôté les résidus cellulaires.

Selon une autre caractéristique de la présente invention, on emploie, pour la transformation levurienne, des levures à activité estérasique inférieure ou égale à 5 μmoles de p-nitrophénol/mg de protéines cellulaires et de préférence inférieure à 2 μmoles de p-nitrophénol/mg de protéines cellulaires.

La présence d'esters a un rôle important dans la constitution de l'arôme des matières premières végétales. Or, on a constaté que la capacité estérogène de certaines espèces de levures engendre la (ré) génération d'arômes dans des préparations de fruits inoculées avec ces levures. La capacité estérogène des levures est liée à une faible activité estérasique.

Bien que l'invention soit plus particulièrement interessante pour le traitement des produits d'origine végétale, il peut être utilisé pour des produits d'origines différentes, tels que des produits lactés.

Dans le cadre de la présente invention, on utilise préférentiellement des levures du genre Williopsis, Pachysolen ou Candida.

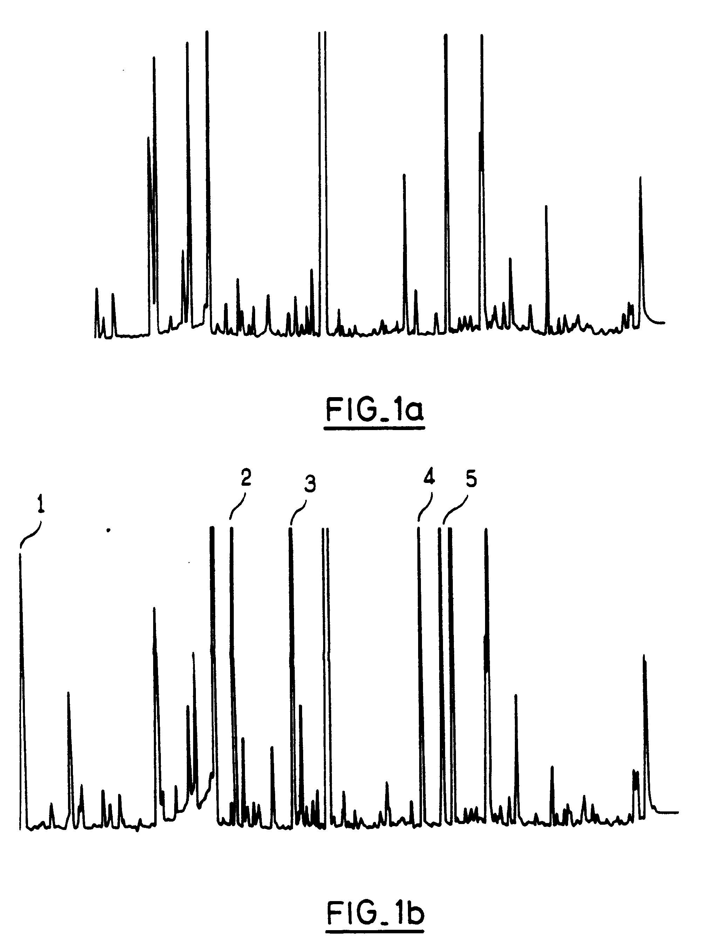

Les expériences qui suivent, illustrent des caractéristiques et des avantages de la présente invention, alors que les figures 1a et 1b illustrent l'enrichissement du profil aromatique d'un concentré de fruits de la passion par une culture d'une souche de Candida humicola.

## EXEMPLE 1

### Choix des levures

Le tri des souches de levures se fait par la mesure de l'hydrolyse du p-nitrophénylacétate par les cellules de levures. Un millilitre de mélange de réaction (p-nitrophénylacétate 2mM dans un tampon phosphate 0,5 M, pH = 6,4) est incubé pendant 10 min à 30°C avec une quantité de cellules représentant 1 à 2 mg de protéines cellulaires totales (les cellules proviennent d'une culture standard en phase stationnaire). La quantité de p-nitrophénol produite par l'hydrolyse du p-nitrophénylacétate est déterminée au spectrophotomètre ($\lambda$ = 405 nm) à l'aide d'une gamme de solutions de p-nitrophénol (0,01 à 0,1 $\mu$moles). Les résultats sont exprimés en $\mu$moles de p-nitrophénol par mg de protéines cellulaires.

## EXEMPLE 2

### Matières premières

Des concentrés de raisins, de pommes, de pêches et de fruits de la passion sont amenés à 10° Brix (un densimètre gradué en degrés Brix poids donne par simple lecture, le poids de sucre pur contenu dans 100 g d'une solution aqueuse, à la température de 15°C) avec de l'eau et le pH est ajusté à 3,4-3,5. Les produits sont stérilisés par filtration (filtre Millipore 0,22 m$\mu$).

Des purées de fraises, bananes, poirés et cassis sont préparées à partir de 200 g de fruits, broyés avec 50 ml d'eau. Les préparations sont ensuite autoclavées 20 min à 120°C.

Des résidus de distillation de moûts de poirés fermentés sont utilisés dilués 1 : 2 avec de l'eau et autoclavés 20 min à 120°C.

## EXEMPLE 3

### Conditions de culture

A partir d'une culture de collection, on prépare une culture mère en milieu standard (extrait de levure 3 ‰ bactopeptone 5 ‰, extrait de malt 3 ‰, glucose 10 ‰) incubée à 25°C sous agitation constante (150 rotations par minute).

Les cellules en début de phase stationnaire sont lavées à l'eau physiologique et $10^8$ cellules servent à inoculer 200 ml de préparation de fruits, dans des fioles Erlenmayer de 500 ml, munies de bouchons de coton.

Les cultures sont placées à 25°C sur un agitateur giratoire, à 150 rotations par minute. Après 16 heures, on évalue la transformation aromatique des produits par analyse sensorielle et par chromatographie en phase gazeuse.

## EXEMPLE 4

### Résultats

Des essais sont effectués sur des souches provenant de collections publiques et privées. On évalue l'activité estérasique de chaque levure et on note les transformations aromatiques opérées pour chaque préparation de fruits. Le tableau 1 donne l'ensemble des résultats de ces essais.

On constate que les levures qui possèdent une activité estérasique inférieure ou égale à 5 $\mu$moles de p-nitrophénol (PNP) par mg de protéines cellulaires sont les plus performantes du point de vue aromatique. C'est en particulier le cas pour Williopsis saturnus, Pachysolen taunophilus et Candida humicola.

Le tableau II rassemble d'autres levures ayant des activités estérasiques supérieures à 5 $\mu$moles testées qui ne donnent pas d'amélioration significative de l'arôme des préparations de fruits.

Les figures 1a et 1b illustrent l'enrichissement du profil aromatique d'un concentré de fruits de la passion par culture d'une souche de Candida humicola. La figure 1a représente plus précisément le profil aromatique du concentré dilué de fruits de la passion par chromatographie en phase gazeuse.

La figure 1b représente le profil du même concentré dilué après traitement par une souche de Candida numicola. Les références chiffrées 1 à 5 correspondent respectivement à l'apparition des composés suivants : isopentanol, acide isobutyrique, alcool furfurilique, alcool benzylique, phényléthanol.

L'effet d'amélioration de l'arome se traduit par la reconstitution de l'arôme initial perdu au cours de la stérilisation thermique (purée de fruits) ou au cours de la fabrication (concentré de fruits).

On constate un renforcement de l'arome typique de fruit dans certaines préparations faiblement aromatiques.

De nouveaux aromes fruités sont créés, inexistants dans le produit d'origine mais susceptibles d'apporter des parfums agréables à la matière première en question.

Enfin, certains composés à l'odeur désagréable, apparus lors du traitement thermique disparaissent (par exemple, le furfural qui est réduit en alcool correspondant et est ensuite estérifié).

TABLEAU I

| Levure | Activité estérasique µmoles PNP/mg protéines | Concentré | | | | Purée | | | Résidu de poires |
|---|---|---|---|---|---|---|---|---|---|
| | | pêche | raisin | passion | pomme | fraise | banane | cassis | |
| B-Intermedius CBS 247 | 11,6 | — | — | — | — | — | — | — | — |
| C-sorboxylosa CBS 2121 | 11,4 | — | — | — | — | — | — | — | — |
| H-anomala CBS 247 | 10,9 | — | — | — | — | — | — | — | — |
| Williopsis saturnus CBS 1994 | 2,7 | RA | — | AN | — | — | RA | — | AN |
| W.saturnus CBS 5761 | 3,6 | AN | — | AN | — | — | RA | — | AN |
| W.saturnus CBS 4610 | 3,2 | RA | — | AN | AN | — | RA | — | RA |
| W.saturnus ENSIA | 2,9 | AN | — | — | AN | — | — | — | — |
| Pachysolen taunophilus CBS 4044 | 1,8 | RA | AN | — | RA | — | RTA | RA | RA |
| P. taunophilus CBS 4045 | 2,4 | — | AN | RA | RTA | — | RTA | RA | RA |
| P. taunophilus A.P. James* P126-1B | 1,9 | RTA | AN | RTA | RA | AN | RTA | RTA | RA |
| Candida humicola CBS 2040 | 1,7 | RTA | AN | RTA | RA | RA | RTA | RTA | RA |

* A.P. James – National Research Council of Canada, Ottawa

AN : arôme nouveau
RA : régénération de l'arôme initial
RTA : renforcement de l'arôme

EP 0 277 062 B1

TABLEAU II

Levures

Saccharomyces cerevisiae ATCC 36012

S. chevalieri ENSIA L 2010

S. bayanus CBS 429

S. diastaticus H. Tamuaki ① 5305-9D

Zygosaccharomyces rouxii CBS 441

Schizosaccharomyces pombe CBS 1042

Saccharomycodes ludwigii CBS 1169

Kluyveromyces lactis CBS 4372

Dekkera intermedia CBS 2796

Hansenula anomala CBS 263

H. anomala CBS 442

H. anomala CBS 1683

H. anomala CBS 1685

H. anomala ENSIA

H. anomala CRPR ② -M$_4$9

Brettanomyces intermedius CBS 73

B. claussenii CBS 4608

B. claussenii CBS 4461

B. lambicus CBS 5206

Candida humicola CBS 2040

C. krusei CBS 2048

C. glabrata CBS 2663

① : H. Tamaki Doshisha Women's College, Kyoto 602, Japan

② : Centre de Recherche Pernod-Ricard

ATCC : American Type Culture Collection

CBS : Centraal Bureau voor Schimmel Culture Delft Holland

## Revendications

1. Procédé d'aromatisation par traitement levurien de produits alimentaires notamment à base de matières premières végétales peu aromatisées ou désaromatisées, ou de compositions à base de telles matières, caractérisé en ce que lesdits produits sont traités par une culture de levure ou un extrait acellulaire desdites levures, ces levures ou extrait acellulaire présentant une activité estérasique inférieure ou égale à 5 $\mu$moles de p-nitrophénol/mg de protéines cellulaires, de préférence inférieure ou égale à 2 $\mu$moles de p-nitrophénol/mg de protéines cellulaires.

2. Procédé d'aromatisation par traitement levurien selon la revendication 1, caractérisé en ce que, après traitement thermique desdits produits notamment à base de matières premières végétales, on les soumet au traitement par la culture de levures ou l'extrait acellulaire.

3. Procédé selon l'une des revendications 1 et 2, caractérisé en ce que lesdites levures sont choisies dans le groupe formé par les levures du genre Williopsis, Pachysolen et Candida.

4. Procédé selon l'une des revendications 1 à 3, caractérisé en ce que lesdites levures sont choisies dans le groupe formé par Williopsis saturnus, Pachysolen taunophilus et Candida humicola.

5. Procédé selon l'une des revendications 1 à 4, caractérisé en ce que les matières premières végétales ou les compositions sont choisies parmi les jus et les purées de fruits frais et de légumes, les concentrés de fruits, et les résidus de distillation de fruits.

6. Produits alimentaires obtenus par la mise en oeuvre du procédé selon l'une des revendications 1 à 5.


## Patentansprüche

1. Aromatisierungsverfahren durch Hefebehandlung von Lebensmittelprodukten, im besonderen auf Basis von wenig aromatisierten oder entaromatisierten pflanzlichen Ausgangsmaterialien oder von Zusammensetzungen auf Basis solcher Materialien, dadurch gekennzeichnet, daß diese Produkte mit einer Hefekultur oder mit einem nicht-zellulären Extrakt dieser Hefen behandelt werden, wobei die Hefen oder der nicht-zelluläre Extrakt eine Esteraseaktivität aufweist, die kleiner oder gleich 5 $\mu$mol p-Nitrophenol/mg zellulärem Protein, und vorzugsweise kleiner oder gleich 2 $\mu$mol p-Nitrophenol/mg zellulärem Protein ist.

2. Aromatisierungsverfahren durch Hefebehandlung nach Anspruch 1, dadurch gekennzeichnet, daß man diese im besonderen auf Basis pflanzlicher Ausgangsmaterialien beruhenden Produkte nach einer Wärmebehandlung einer Behandlung mit der Hefekultur oder dem nichtzellulären Extrakt unterzieht.

3. Verfahren nach einem der vorhergehenden Ansprüche 1 und 2, dadurch gekennzeichnet, daß die Hefen ausgewählt sind aus der Gruppe gebildet aus Hefen der Gattung Williopsis, Pachysolen und Candida.

4. Verfahren nach einem der Ansprüche 1 bis 3, dadurch gekennzeichnet, daß die Hefen ausgewählt sind aus der Gruppe gebildet aus Williopsis saturnus, Pachysolen taunophilus und Candida humicola.

5. Verfahren nach einem der Ansprüche 1 bis 4, dadurch gekennzeichnet, daß die pflanzlichen Ausgangsmaterialien oder die Zusammensetzungen ausgewählt sind aus Säften und Pürrees von frischen Früchten und Gemüsen, Fruchtkonzentraten oder Resten aus der Destillation von Früchten.

6. Lebensmittelprodukte, erhältlich durch das Verfahren nach einem der Ansprüche 1 bis 5.


## Claims

1. A process for the flavouring of foodstuffs by treatment with yeast, especially foodstuffs based on vegetable raw materials which have little flavour or have been rendered flavourless, or compositions based on such materials, characterized in that the said products are treated with a yeast culture or an acellular extract of the said yeasts, the esterase activity of these yeasts or acellular extract being less than or equal to 5 $\mu$mol of p-nitrophenol/mg of cell proteins and preferably less than or equal to 2 $\mu$mol of p-nitrophenol/mg of cell proteins.

2. The flavouring process by treatment with yeast according to Claim 1, characterized in that, after heat treatment of the said products, especially those based on vegetable raw materials, they are subjected to the treatment with the yeast culture or acellular extract.

3. The process according to one of Claims 1 and 2, characterized in that the said yeasts are selected from the group comprising yeasts of the genera Williopsis, Pachysolen and Candida.

4. The process according to one of Claims 1 to 3, characterized in that the said yeasts are selected from the group comprising Williopsis saturnus, Pachysolen taunophilus and Candida humicola.

5. The process according to one of Claims 1 to 4, characterized in that the vegetable raw materials or the compositions are selected from the group comprising vegetable and fresh fruit juices and purees, fruit concen-

7

trates and fruit distillation residues.

6. Foodstuffs obtained by carrying out the process according to one of Claims 1 to 5.

FIG.1a

FIG.1b